Europäisches Patentamt

(19) European Patent Office

Office européen des brevets

(11) Veröffentlichungsnummer: **0 195 903 B1**

(12) **EUROPÄISCHE PATENTSCHRIFT**

(45) Veröffentlichungstag der Patentschrift: 25.07.90

(51) Int. Cl.⁵: **F 24 D 3/16,** F 24 D 3/14

(21) Anmeldenummer: **86101479.3**

(22) Anmeldetag: **05.02.86**

(54) Plattenförmiges Heizelement, insbesondere für Fussbodenheizungen.

(30) Priorität: **19.03.85 DE 3509895**

(43) Veröffentlichungstag der Anmeldung:
**01.10.86 Patentblatt 86/40**

(45) Bekanntmachung des Hinweises auf die
Patenterteilung:
**25.07.90 Patentblatt 90/30**

(84) Benannte Vertragsstaaten:
**AT BE CH DE FR GB IT LI LU NL SE**

(56) Entgegenhaltungen:
**EP-A-0 186 592**
**EP-A-0 189 020**
**DE-A-3 032 694**
**US-A-4 184 543**

(73) Patentinhaber: **Itrag AG**
**Hauptstrasse 34**
**CH-8750 Glarus (CH)**

(72) Erfinder: **Haugeneder, Hans**
**Martin Mayerg. 7/4**
**A-2500 Baden (AT)**

(74) Vertreter: **Reinhard, Skuhra, Weise**
**Friedrichstrasse 31**
**D-8000 München 40 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Beschreibung

Die Erfindung betrifft ein plattenförmiges Heizelement gemäß dem Oberbegriff des Patentanspruchs 1.

Ein plattenförmiges Heizelement nach dem Oberbegriff des Patentanspruchs 1 ist aus der DE-A-30 32 694 bekannt.

Die US-A-4 184 543 beschreibt einen aus Metallplatten gebildeten Wärmetauscher, der rohrförmige Kanäle enthält zur Durchleitung eines Wärmeübertragungsmediums.

Der Erfindung liegt die Aufgabe zugrunde, ein Heizelement zu schaffen, das eine möglichst gleichmäßige, vollflächige Durchströmung des Hohlraumes zwischen der oberen und unteren Platte sicherstellt.

Diese Aufgabe wird durch die im kennzeichnenden Teil des Patentanspruchs 1 angegebenen Merkmale gelöst.

Ausgestaltungen der Heizplatte ergeben sich aus den Unteransprüchen.

Die durchschnittliche Wassergeschwindigkeit in Heizungsanlagen liegt aufgrund verschiedener technischer Erfordernisse bei v = 1,2 m/sec. Dieser Wert stellt die üblicherweise höchste Wassergeschwindigkeit in den Anschlußbögen und Verbindungsleitungen dar, die mithin nicht überschritten werden darf. Der dynamische Querschnitt jedes einzelnen Heizelements beträgt ein Vielfaches des jeweiligen Anschlußquerschnitts, infolgedessen sich die Wassergeschwindigkeit nach dem Eintritt des Heizmediums (oder Kühlmediums) in das Heizelement um ein Vielfaches verringert und häufig zumindest bereichsweise kaum mehr Strömungsgeschwindigkeiten erreicht werden, die einer gerichteten Strömung entsprechen. Durch die erfindungsgemäße Ausbildung bzw. Anordnung der Abstandselemente wird eine sehr genaue Aufteilung des Heizmediums, beispielsweise Wasser, nach dem Eintritt in das Heizelement erreicht. Ferner wird der Widerstand pro Heizelement durch die Anordnung der Abstandselemente in einem vorbestimmten Muster exakt definiert. Bei dem Heizelement wird insbesondere sichergestellt, daß zwischen den Anschlußelementen, die bei einem Heizelement plattenförmiger Gestalt etwa diametral einander gegenüber liegen, kein durchgehender "Kanal" vorliegt, der die Hauptströmung beinhaltet, sondern daß durch die versetzte Anordnung der Abstandselemente ein solcher durchgehender "Kanal" verhindert wird. Aus der Achse des Anschlußelementes gesehen, bedeutet dies, daß die Abstandselemente zueinander versetzt liegen und dadurch eine Verteilung des das Heizelement durchströmenden Mediums über den gesamten Hohlraum sicherstellen.

Obgleich das Heizelemente vorzugsweise für Fußbodenheizungen anwendbar ist, läßt es sich auch als Wand- und Deckenheizung sowie für Kühlzwecke einsetzen.

Im folgenden wird das plattenförmige Heizelement an Hand der Zeichnung zur Erläuterung weiterer Merkmale beschrieben. Es zeigen:

Fig. 1 eine horizontale Schnittansicht durch ein Heizelement,

Fig. 2 eine horizontale Teilschnittansicht des Heizelementes nach Fig. 1 zur Erläuterung der Strömungsverhältnisse, und

Fig. 3 eine vertikale Schnittansicht durch das Heizelement nach Fig. 1 entlang der Linie III - III.

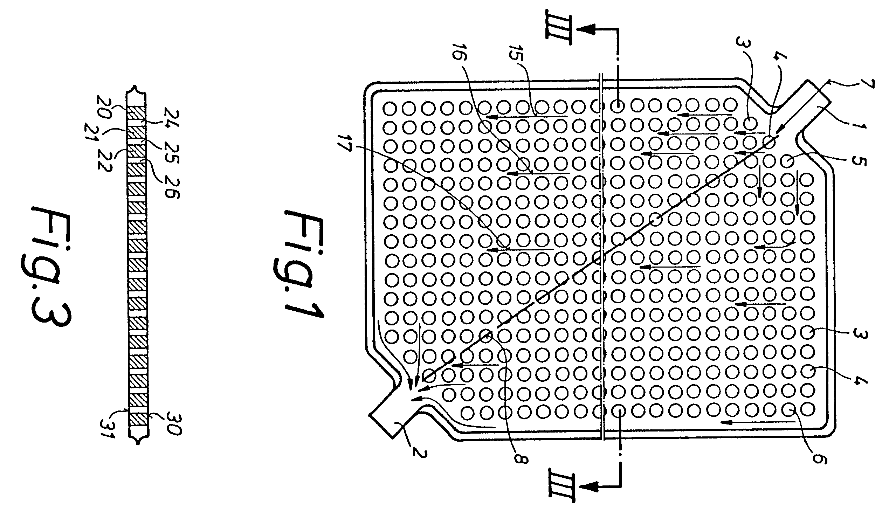

Fig. 1 zeigt eine horizontale Schnittansicht auf ein plattenförmiges Heizelement, das aus einer oberen und unteren Platte besteht. Die obere und untere Platte sind durch Abstandselemente miteinander verbunden, wobei zwischen den beiden Platten ein Hohlraum festgelegt ist, der in noch zu beschreibender Weise mit den Abstandelementen durchsetzt ist.

Nach Fig. 1 weist das Heizelement zwei im wesentlichen diametral zueinander liegende Anschlußelemente 1, 2 vorzugsweise in Form von rohrförmigen Anschlußstutzen auf. Zwischen den beiden Anschlußelementen 1, 2 sind in der Zeichenebene im wesentlichen zueinander senkrechte Reihen, d.h. vertikale und horizontale Reihen mit Abstandselementen vorgesehen, von denen einige Abstandselemente mit dem Bezugszeichen 3, 4, 5 und 6 bezeichnet sind. Mit 7 ist die im eingangsseitigen Anschlußelement 1 verlaufende Strömung des Heizmediums bezeichnet. Das Heizmedium, beispielsweise Wasser, trifft somit nach seinem Durchtritt durch das Anschlußelement 1 auf eine erste Reihe von Abstandselementen 3, 4, 5 auf und wird durch diese Abstandselemente in seitlicher Richtung abgelenkt. Dadurch wird ein Durchfluß des Hohlraumes des Heizelementes in seitlicher Richtung gewährleistet, wie die Pfeile in Fig. 1 verdeutlichen, somit ein direkter Kanal zwischen den Anschlußelementen 1, 2, also ein freier Durchfluß verhindert, der dann möglich wäre, wenn entlang der in Fig. 1 mit 8 bezeichneten Linie keine Abstandselemente vorhanden wären.

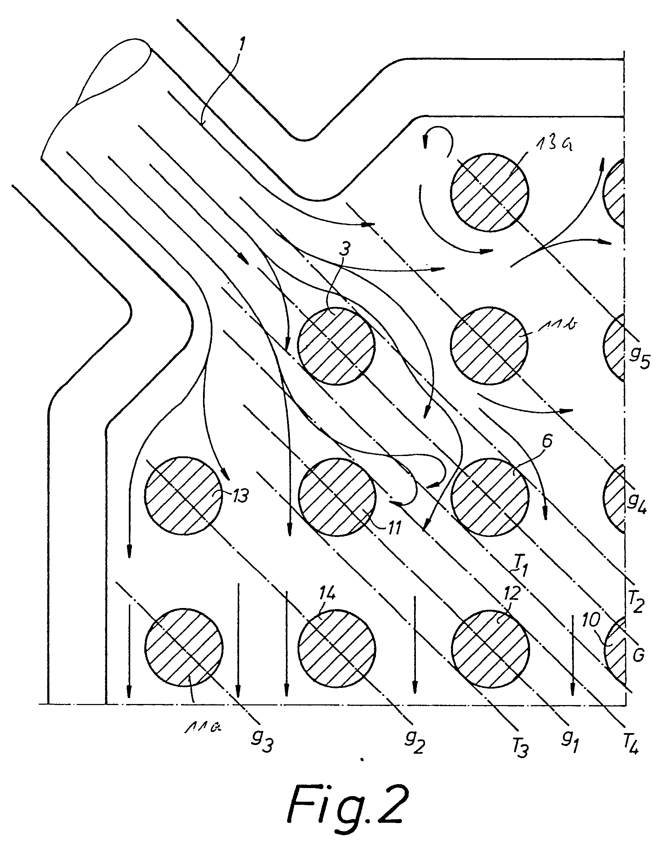

Die Teilansicht in Fig. 2 verdeutlicht das erfindungsgemäße Prinzip der Anordnung der einzelnen Abstandselemente. In Fig. 2 ist mit G die Verlängerung der Mittelachse des rohrförmigen Anschlußelementes 1 bezeichnet. Auf der Geraden G liegt somit mittig dem Anschlußelement 1 gegenüber das erste Abstandselement 3. Weiterhin liegen auf der Geraden G hinter dem Abstandselement 3 weitere Abstandselemente 6, 10 usw.

Auf den zur Geraden G parallelen Geraden $g_1$, $g_2$, $g_3$, $g_4$ usw. sind in gleicher Weise wie unter Bezugnahme auf die Gerade G erläutert Abstandselemente in Abstand zueinander vorgesehen. Auf der Geraden $g_1$ sind unter anderem Abstandselemente 11, 12, aufder Geraden $g_2$ unter anderem Abstandselemente 13, 14 usw. vorgesehen. Entsprechendes gilt für die Abstandselemente auf den Geraden $g_4$, $g_5$. Die Ansicht nach Fig. 2 zeigt, daß die versetzte Anordnung von Abstandselementen entsprechend den Geraden G, $g_1$ bis $g_5$ usw. dazu führt, daß das Heizmedium das Heizelement nicht nur entlang eines Kanales durchströmt, sondern praktisch den gesamten Hohlraum des Heizelementes infolge der Ablenkung des Heizmediums bis in die entferntesten seitli-

chen Bereiche des Heizelementes.

Bei der in Fig. 2 gezeigten Ausführungsform ist die Anordnung der Abstandselemente — in Bezug auf das eingangsseitige Anschlußelement — derart getroffen, daß eine erste Reihe mit Abstandselementen gebildet ist, die in der Verlängerung der Mittelachse des Anschlußelementes 1 liegt und daß weitere dazu parallele Reihen beidseitig der Geraden G vorhanden sind. Damit weist das Heizelement eine Vielzahl von Reihen mit Abstandselementen auf, wobei die Reihen jeweils parallel zueinander und parallel zur Achse der Anschlußelemente 1, 2 liegen. An der Seite des Anschlußelementes 2 entspricht die Anordnung der Abstandselemente genau derjenigen, wie sie unter Bezugnahme auf Fig. 2 erläutert ist.

Die Abstandselemente sind, wie Fig. 2 zeigt, unter Einhaltung im wesentlichen konstanter Abstände zueinander entlang der durch die Geraden G, $g_1$, $g_2$, usw. dargestellten Reihen vorgesehen. Die Abstandselemente 3, 13 entland der Geraden G, $g_2$, liegen ihrerseits unter Einhaltung eines vorgegebenen Abstandes nebeneinander, d.h. das Muster weist senkrecht zu den Geraden G, $g_1$ usw. liegende weitere Reihen von Abstandselementen auf, z.B. eine Reihe mit den Abstandselementen 13, 3, 13a, eine Reihe mit den Abstandselementen 11a, 11, 11b usw.

Die Abstandselemente 3, 6 usw. entlang der Geraden G bilden Tangenten $T_1$, $T_2$, entsprechend bilden die Abstandselemente entlang der Geraden $g_1$ Tangenten $T_3$, $T_4$ usw. Entsprechend dem gewünschten Strömungsquerschnitt wird der Abstand zwischen einander benachbarten Tangenten, z.B. $T_1$, $T_4$ gewählt; dieser Abstand entspricht bei der dargestellten Ausführungsform etwa dem halben Durchmesser der Abstandselemente, und kann abhängig von dem jeweils erwünschten Querschnitt zur Erhöhung des Strömungswiderstandes bis 0 reduziert werden; in letzterem Falle fällt z. B. die Tangente $T_1$ mit der Tangente $T_4$ zusammen.

Besonders vorteilhaft ist, daß durch die beschriebene Anordnung der Abstandselemente die Widerstands- und Strömungsverhältnisse in den einzelnen Heizelementen unabhängig von der Größe jedes Heizelementes in optimaler Weise erhalten werden, und daß sowohl bei großen wie auch bei kleinen Heizelementen eine Durchströmung des gesamten Hohlraumes des Heizelementes sichergestellt ist ohne die Gefahr einer Kanalbildung zu erhalten. Die in Fig. 1 durch die Pfeile 15 bis 17 veranschaulichten Strömungen ergeben sich durch in Vertikalrichtung verbleibende Kanäle und bewirken die völlständige Durchströmung des Heizelementes auch bis in die seitlichsten Eckbereiche des Heizelementes; diese Strömungen werden zum Anschlußelement 2 zurückgeführt, wie die Pfeile im Bereich des Anschlußelementes 2 zeigen. Diese "Kanäle" tragen zu einer guten Verteilung der einzelnen Wasserströme in dem Heizelement bei und sind Ergebnis der Anordnung der Abstandselemente 3 bis 5 mit den zugehörigen Reihen am Eintritt des Heizmediums im Bereich des Anschlußelementes 1.

Gemäß vorstehenden Ausführungen ist es wesentlich, daß das Abstandselement 4 und somit die Gerade G mittig am Anschlußelement 1 angeordnet sind und zwischen den beiden Anschlußelementen 1, 2, d.h. zwischen dem Vorlauf und dem Rücklauf dem Heizmedium kein freier Durchgang möglich ist.

Die Abstandselemente haben die Funktion von Schikanen und ermöglichen durch unterschiedliche Größe bzw. unterschiedlichen Durchmesser die Festlegung des gewünschten Strömungsquerschnittes und damit die Festlegung einer Mindestfließgeschwindigkeit im gesamten Heizelement.

Bei dem Heizelement nach Fig. 1 und 2 liegt im Bereich des Anschlußelementes 1 die höchste Fließgeschwindigkeit vor, die sich in das Heizelement 1 hinein verringert unter Beibehaltung einer geringen Wassergeschwindigkeit in allen Bereichen der Heizplatte, während sich die Wassergeschwindigkeit zum Anschlußelement 2 wiederum vergroßert.

Das Heizelement weist somit eine Vielzahl von Reihen mit Abstandselementen auf, die parallel zur Achse der Anschlußelemente liegen, während gleichzeitig in senkrechter und horizontaler Richtung, d.h. in einem Winkel von etwa 45° zur Verlängerung der Achse der Anschlußelemente Kanäle freibleiben, welche zur seitlichen Durchströmung des Heizelementes beitragen.

Fig. 3 zeigt eine Schnittansicht entlang der Linie III - III in Fig. 1. Mit dem Bezugszeichen 20, 21, 22 sind die Abstandselemente in der Schnittlinie dargestellt, während mit 24, 25, 26 ein Teil der zwischen den Abstandselementen verbleibenden Freiräume angegeben sind. Die obere Platte des Heizelementes ist mit 30, die unter Platte mit 31 bezeichnet. Seitlich sind die beiden Platten fest miteinander verbunden und ergeben auf diese Weise den vom Heizmedium durchflossenen Hohlraum.

Wie aus Fig. 1 ersichtlich ist, setzt sich die in Verbindung mit Fig. 2 beschriebene Anordnung von Abstandselementen über den gesamten Hohlraum bis zum gegenüberliegenden Anschlußelement 2 fort.

Durch die Festlegung des Verhältnisses des Flächenquerschnitts in den Anschluß- oder Verbindungsleitungen gegenüber dem Flächenquerschnitt in der Heizplatte wird bei maximal gegebenem Volumenstrom auf Grund der bekannten maximal zulässigen Geschwindigkeit in den Anschlußleitungen die Strömungsgeschwindigkeit des Mediums innerhalb der Heizplatte definiert. Die Geschwindigkeit in der Heizplatte soll 0,1 m/sec nicht unterschreiten, um zu gewährleisten, daß in der Heizplatte noch gerichtete Strömungen herrschen. Durch die Anordnung der ersten, quer zur Strömungsrichtung aus der Anschlußleitung in die Heizplatte liegenden Reihe von Noppen wird ein freies Ausströmung des Mediums vom Querschnitt der Anschlußleitung in den Querschnitt der Heizplatte verhindert, wodurch sich die Stoßverluste nach Carnot-Bordasch $Pv = P1 - P2$ und damit Druckverluste vermindern.

In der Heizungstechnik sind auf Grund der durch die bauphysikalischen Gegebenheiten und durch die Grenzwerte der Behaglichkeit relativ genau definierbaren Lastzustände die Massenströme für die einzelnen Heizplatten errechenbar. Das Flächenquerschittsverhältnis soll 1 : 4 nicht übersteigen.

Bei Einsatz der Heizplatten als Wärmetauscher bei Kühlvorgängen soll aus dem selben Grund das Verhältnis 1 : 3,5 nicht überschritten werden. Es hat sich gezeigt, daß eine Verkleinerung des Querschnittsverhältnisses bis zu Grenzwerten von 1 : 3,5 sowohl bei Heiz- als auch bei Kühlplatten vorteilhaft ist. Wird durch die Anordnung der Noppen ein Flächenquerschnittsverhältnis von 1 : 3 festgelegt, wird die Strömungsgeschwindigkeit höher und die unmittelbar mit der Strömungsgeschwindigkeit zusammenhängenden Wärmeübertragungen innerhalb jeder Platte verbessert.

## Patentansprüche

1. Plattenförmiges Heizelement, insbesondere für Fußbodenheizungen, bestehend aus zwei einen Hohlraum festlegenden Platten aus Kunststoff, bei dem zwischen den Platten in zur Plattenebene senkrechter Richtung die beiden Platten miteinander verbindende Abstandselemente (3, 4, 5, 6, 10 usw.) vorgesehen sind, und mit Anschlußelementen zur Durchführung eines flüssigen Heizmediums durch den von den Platten festgelegten Hohlraum, dadurch gekennzeichnet,

daß die Anschlußelemente (1, 2) im wesentlichen diametral einander gegenüber liegen,

daß die Abstandselemente (3, 4, 5, 6, 10 usw.) derart angeordnet sind, daß sie eine erste Reihe entlang einer ersten Geraden (G) bilden, wobei die erste Gerade (G) einer Verlängerung der Achse eines der Anschlußelemente (1, 2) entspricht,

daß alle anderen Abstandselemente (3, 5, 6, 10 usw.) weitere Reihen von Abstandselementen bilden, die entlang von Geraden (g₁, g₂ usw.) liegen, welche ihrerseits parallel zur ersten Geraden (G) angeordnet sind,

daß die Abstandselemente (3, 4, 5, 6, 10 usw.) mit ihrem Mittelpunkt jeweils auf einer der Geraden (G, g₁, g₂) liegen,

daß eines (3) der Abstandselemente (3, 4, 5, 6, 10 usw.) der ersten Reihe mittig dem Anschlußelement (1) gegenüberliegt und eine Verteilung der Strömung nach der Seite hin bewirkt, und

daß die beiden Platten seitlich fest miteinander verbunden sind.

2. Heizelement nach Anspruch 1, dadurch gekennzeichnet, daß der Abstand zwischen jeweils benachbarten Abstandselementen einer Reihe mindestens annähernd konstant ist.

3. Heizelement nach Anspruch 1 oder 2, dadurch gekennzeichnet, daß der Abstand zwischen jeweils Reihen von Abstandselementen festlegenden, benachbarten Gerade (G, g₁, g₂ usw.) annähernd gleich groß ist.

4. Heizelement nach einem der vorangehenden Ansprüche, dadurch gekennzeichnet, daß die Abstandelemente (3, 4, 5 usw.) kreisrunden Querschnitt aufweisen.

5. Heizelement nach einem der vorangehenden Ansprüche, dadurch gekennzeichnet, daß die jeweils entlang einer Geraden liegenden Abstandselemente (3, 4, 5 usw.) mit ihrem Außenumfang parallel zur ersten Geraden (G) liegende Tangenten (T₁, T₂ usw.) festlegen.

6. Heizelement nach Anspruch 5, dadurch gekennzeichnet, daß nebeneinanderliegende, durch die Abstandselemente definierte Tangenten (T₁, T₄) zweier benachbarter Reihen von Abstandselementen (3, 4, 5 usw.) einen Abstand zwischen 0 und etwa dem halben Durchmesser der Abstandselemente aufweisen.

## Revendications

1. Elément de chauffage en forme de plaque, en particulier pour chauffages par le sol, comprenant deux plaques en matière plastique délimitant une cavité, élément dans lequel il est prévu, entre les plaques, des éléments d'entretoisement (3, 4, 5, 6, 10, etc.) reliant les deux plaques ensemble et s'étendant transversalement par rapport au plan des plaques et qui comporte des éléments de raccordement pour permettre le passage d'un fluide calorifique dans la cavité délimitée par les plaques,

caractérisé en ce que les éléments de raccordement (1, 2) sont opposés de façon sensiblement diamétrale l'un par rapport à l'autre,

en ce que les éléments d'entretoisement (3, 4, 5, 6, 10, etc.) sont disposés de telle façon qu'ils forment une première rangée sur une première droite (G), la première droite (G) correspondant à un prolongement de l'axe de l'un des éléments de raccordement (1, 2),

en ce que tous les autres éléments d'entretoisement (3, 4, 5, 6, 10, etc.) forment d'autres rangées d'éléments d'entretoisement situées sur des droites (g₁, g₂, etc.) qui sont quant à elles parallèles à la première droite (G),

en ce que tous les éléments d'entretoisement (3, 4, 5, 6, 10, etc.) ont tous leur centre sur l'une des droites (G, g₁, g₂, etc.)

en ce que l'un (3) des éléments d'entretoisement (3, 4, 5, 6, 10, etc.) de la première rangée se trouve en face de l'élément de raccordement (1) et centré par rapport à celui-ci et provoque un partage de l'écoulement vers le côté, et

en ce que les deux plaques sont fixées ensemble sur les côtés.

2. Elément de chauffage selon la revendication 1, caractérisé en ce que la distance entre deux éléments d'entretoisement consécutifs d'une rangée est au moins sensiblement constante.

3. Elément de chauffage selon la revendication 1 ou 2, caractérisé en ce que les distances entre deux droites voisines (G, g₁, g₂, etc.) définissant des rangées d'éléments d'entretoisement sont sensiblement égales.

4. Elément de chauffage selon l'une des revendications précédentes, caractérisé en ce que les éléments d'entretoisement (3, 4, 5, etc.) ont une section circulaire.

5. Elément de chauffage selon l'une des revendications précédentes, caractérisé en ce que les éléments d'entretoisement (3, 4, 5, etc.) situés sur une même droite définissent par leurs pourtours extérieurs des tangentes ($T_1$, $T_2$, etc.) parallèles à la première droite (G).

6. Elément de chauffage selon la revendication 5, caractérisé en ce que des tangentes voisines ($T_1$, $T_4$) définies par les éléments d'entretoisement de deux rangées voisines d'éléments d'entretoisement (3, 4, 5, etc.) présentent un écartement compris entre 0 et environ la moitié du diamètre des éléments d'entretoisement.

**Claims**

1. Plate-shaped heating element, in particular for floor heating systems, consisting of two plates of plastic which define a cavity, wherein between the plates in a direction perpendicular to the plate plane spacer elements (3, 4, 5, 6, 10 etc.) connecting the two plates together are provided, and with connection elements for passing a liquid heating medium through the cavity defined by the plates, characterized in

that the connecting elements (1, 2) lie substantially diametrically opposite each other,

that the spacer elements (3, 4, 5, 6, 10 etc.) are arranged in such a manner that they form a first row along a first straight line (G), the first straight line (G) corresponding to an extension of the axis of one of the connecting elements (1, 2),

that all the other spacing elements (3, 5, 6, 10 etc.) form further rows of spacing elements which lie along straight lines ($g_1$, $g_2$ etc.) which in turn are arranged parallel to the first straight line (G),

that the spacing elements (3, 4, 5, 6, 10 etc.) each lie with their centre point on one of the straight lines (G, $g_1$, $g_2$),

that one (3) of the spacer elements (3, 4, 5, 6, 10 etc.) of the first row lies centrally opposite the connecting element (1) and effects a distribution of the flow towards the side, and

that the two plates are laterally fixedly connected together.

2. Heating element according to claim 1, characterized in that the spacing between respective adjacent spacer elements of a row is at least approximately constant.

3. Heating element according to claim 1 or 2, characterized in that the spacing between adjacent straight lines (G, $g_1$, $g_2$ etc.) defining respective rows of spacer elements is approximately of the same magnitude.

4. Heating element according to any one of the preceding claims, characterized in that the spacer elements (3, 4, 5 etc.) have a circular cross-section.

5. Heating element according to any one of the preceding claims, characterized in that the spacer elements (3, 4, 5 etc.) lying along a respective straight line define with their outer periphery tangents ($T_1$, $T_2$ etc.) lying parallel to the first straight line (G).

6. Heating element according to claim 5, characterized in that adjacent tangents ($T_1$, $T_4$) defined by the spacer elements, of two adjacent rows of spacer elements (3, 4, 5 etc.) have a spacing between 0 and about half the diameter of the spacer elements.

Fig.1

Fig.3

1

Fig.2